# EUROPEAN PATENT APPLICATION

(11) **EP 4 685 413 A1**
(43) Date of publication of application: **28.01.2026**
(21) Application number: 25191801.7
(22) Date of filing: 25.07.2025
(51) Int. Cl.: F24T 10/15, F24T 10/00

(54) **GROUNDWATER HEAT EXCHANGER HAVING A CABLE CHANNEL**

(30) Priority: 26.07.2024 US 202463675786 P; 22.07.2025 US 202519276631
(71) Applicant: Darcy Solutions, Inc., New Brighton Minnesota 55112 (US)
(72) Inventor: MARTIN-WAGAR, Ryan, NEW BRIGHTON, 55112 (US); KING, Daniel, NEW BRIGHTON, 55112 (US); LAVOIE, Michael, NEW BRIGHTON, 55112 (US)
(74) Representative: Boult Wade Tennant LLP

(57) **Abstract**

A groundwater heat exchanger includes a plurality of heat exchange pipes, a housing and a cable channel. Each of the heat exchange pipes is configured to receive a loop fluid flow. The housing has an interior chamber that contains the heat exchange pipes and defines a groundwater passageway that is configured to receive a groundwater flow. The cable channel is formed on an exterior of the housing and extends along a central axis of the housing. The cable channel includes at least one cable pathway configured to receive one or more cables.

## Description

### CROSS REFERENCE TO RELATED APPLICATION

The present application is based on and claims the benefit of U.S. provisional patent application Serial No. 63/675,786, filed July 26, 2024, the content of which is hereby incorporated by reference in its entirety.

### FIELD

Embodiments of the present disclosure generally relate to groundwater heat exchangers that are configured for submersion within groundwater, such as in a well or a borehole, and may be used by a heating and/or cooling system. More specifically, embodiments of the present disclosure relate to a groundwater heat exchanger having a cable channel for routing and protecting cabling.

### BACKGROUND

Heating and cooling systems generally move thermal energy from one location to another, such as moving thermal energy from a heat source to a heat sink (for example, a region of higher temperature to a region of lower temperature), or from a heat sink to a heat source (for example, a region of lower temperature to a region of higher temperature). Some heating and cooling systems utilize a heat pump. Heat pumps perform a refrigeration cycle using a circulating refrigerant to move heat through evaporation (heat absorption) and condensation (heat rejection) phases. The evaporation and condensation phases of the refrigerant typically take place in two different units called the evaporator and condenser, respectively. In a heat pump, the evaporator is switched to be a condenser and vice versa depending on whether cooling or heating is required.

Geothermal or ground source heat pumps use the earth as a heat source or heat sink. A heat exchanger is positioned underground to provide cooling by using the earth as a heat sink, or to provide heating by using the earth as a heat source. The ground loops of most traditional geothermal heat pump systems focus on heat exchange via conduction with subsurface rocks and sediments.

The heat exchange performed using such geothermal heat pumps may be enhanced using groundwater within a well or borehole (hereinafter "borehole"), such as discussed in PCT publication number WO2020/117946. For example, a flow of the groundwater may be circulated over the heat exchanger for enhanced thermal energy exchange with the refrigerant using a pump.

### SUMMARY

Embodiments of the present disclosure are directed to groundwater heat exchangers having a cable channel for routing and protecting cabling and methods of installing the groundwater heat exchanger in a borehole.

One embodiment of the groundwater heat exchanger includes a plurality of heat exchange pipes, a housing and a cable channel. Each of the heat exchange pipes is configured to receive a loop fluid flow. The housing has an interior chamber that contains the heat exchange pipes and defines a groundwater passageway that is configured to receive a groundwater flow. The cable channel is formed on an exterior of the housing and extends along a central axis of the housing. The cable channel includes at least one cable pathway configured to receive one or more cables.

In accordance with some embodiments, a cross-section of the exterior of the housing taken perpendicularly to the central axis includes a circular portion and a recessed portion, and the cable channel is formed on the recessed portion.

In accordance with some embodiments, the circular portion is located along an arc of a circle that is coaxial to the central axis, and the recessed portion extends a distance from the radial axis that is less than the radial distance.

In accordance with some embodiments, the housing includes a wall defining the recessed portion.

In accordance with some embodiments, the wall spans an arc of the circle.

In accordance with some embodiments, the cable channel includes at least one channel member that is attached to and extends from the wall, each cable channel member including a divider portion that defines a portion of one of the at least one cable pathway.

In accordance with some embodiments, the cable channel includes a cover extending along the central axis and covering an opening to at least one of the at least one cable pathway.

In accordance with some embodiments, each cable channel member includes a shield portion that extends transversely from the divider portion and defines a portion of one of the at least one cable pathway.

In accordance with some embodiments, the at least one channel member includes a pair of the channel members, and the cable channel includes a cover extending along the central axis between the pair of the channel members and covering an opening to one of the cable pathways.

In accordance with some embodiments, the cable channel includes a channel member that is attached to and extends from the wall, and a cover attached to the channel member. The cover and the channel member define a pair of the cable pathways, located on opposing sides of the channel member.

In accordance with some embodiments, the groundwater heat exchanger includes a pump attached to the housing and a power cable connected to the pump and extending through one of the cable pathways.

In accordance with some embodiments, the groundwater heat exchanger includes a sensor attached to the housing and a sensor wire connected to the sensor and extending through one of the cable pathways.

In accordance with one embodiment of the method of installing a groundwater heat exchanger within a borehole, the groundwater heat exchanger includes a plurality of heat exchange pipes, each heat exchange pipe configured to receive a loop fluid flow, a housing having an interior chamber containing the plurality of heat exchange pipes and defining a groundwater passageway that is configured to receive a groundwater flow, and a cable channel formed on an exterior of the housing and extending along a central axis of the housing, the cable channel including at least one cable pathway configured to receive one or more cables. In the method, cabling is installed within the at least one cable pathway and the groundwater heat exchanger is inserted into the borehole.

In accordance with some embodiments of the method, a cross-section of the exterior of the housing taken perpendicularly to the central axis includes a circular portion, which is located along an arc of a circle that is coaxial to the central axis, and a recessed portion, which extends a distance from the radial axis that is less than the radial distance, and the cable channel is formed on the recessed portion.

In accordance with some embodiments of the method, the cable channel includes at least one channel member that is attached to and extends from the recessed portion, each cable channel member comprising a divider portion that defines a portion of one of the cable pathways.

In accordance with some embodiments of the method, the at least one channel member includes a pair of the channel members, a first cable pathway extends between the pair of the channel members, and installing the cabling includes laying at least one cable in each of the cable pathways and attaching a cover to the recessed portion that covers the first cable pathway.

In accordance with some embodiments of the method, the cable channel includes a channel member that is attached to and extends from the recessed portion wherein first and second cable pathways are located on opposing sides of the channel member, and installing the cabling includes laying at least one cable in each of the cable pathways and attaching a cover to the channel member that covers the first and second cable pathways.

In accordance with some embodiments of the method, the groundwater heat exchanger includes a pump attached to the housing, and installing cabling within the at least one cable pathway includes installing a power cable connected to the pump in one of the cable pathways.

In accordance with some embodiments of the method, the groundwater heat exchanger includes a sensor attached to the housing, and installing cabling within the at least one cable pathway includes installing a sensor wire connected to the sensor in one of the cable pathways.

Another example of the groundwater heat exchanger includes a plurality of heat exchange pipes, a housing, a pump, a cable channel and a power cable. Each heat exchange pipe is configured to receive a loop fluid flow. The housing has an interior chamber that contains the plurality of heat exchange pipes. The pump is attached to the housing and is configured to drive a groundwater flow through a groundwater passageway that extends through the interior chamber and along the plurality of heat exchange pipes. The cable channel is formed on an exterior of the housing and extends along a central axis of the housing. The cable channel includes a cable pathway. The power cable is connected to the pump and supported in the cable pathway.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the Background.

### BRIEF DESCRIPTION OF THE DRAWINGS

FIG. 1 is a simplified diagram of a system that includes a groundwater heat exchanger, in accordance with embodiments of the present disclosure.
FIG. 2 is a simplified diagram of an example of a groundwater heat exchanger, in accordance with embodiments of the present disclosure.
FIG. 3 is an isometric view of an example of a groundwater heat exchanger, in accordance with embodiments of the present disclosure.
FIG. 4 is an isometric view of a top portion of the groundwater heat exchanger of FIG. 3, and FIG. 5 is an isometric view of a bottom portion of the groundwater heat exchanger of FIG. 3, in accordance with embodiments of the present disclosure.
FIG. 6 is a cross-sectional view of the bottom portion of the groundwater heat exchanger of FIG. 5, in accordance with embodiments of the present disclosure.
FIG. 7 is an exploded isometric view of a portion of a housing of a groundwater heat exchanger that includes a cable channel, in accordance with embodiments of the present disclosure.
FIG. 8 is a simplified partial side cross-sectional view of an example of a cable channel mounted to a housing of a groundwater heat exchanger, in accordance with embodiments of the present disclosure.

### DETAILED DESCRIPTION OF ILLUSTRATIVE EMBODIMENTS

Embodiments of the present disclosure generally relate to groundwater heat exchangers that are configured for use in heating and cooling systems, such as a geothermal heat pump system, and may be configured for use within wells or geothermal boreholes to exchange heat with the earth and/or groundwater. The interaction between the heat exchanger and groundwater enhances heat exchange, such as through convective and advective heat exchange.

Embodiments of the present disclosure are described more fully hereinafter with reference to the accompanying drawings. Elements that are identified using the same or similar reference characters refer to the same or similar elements. The various embodiments of the present disclosure may, however, be embodied in many different forms and should not be construed as limited to the embodiments set forth herein. Rather, these embodiments are provided so that this disclosure will be thorough and complete, and will fully convey the scope of the present disclosure to those skilled in the art.

Specific details are given in the following description to provide a thorough understanding of the embodiments. However, it is understood by those of ordinary skill in the art that the embodiments may be practiced without these specific details. For example, circuits, systems, networks, processes, frames, supports, connectors, motors, processors, and other components may not be shown, or may be shown in block diagram form in order to not obscure the embodiments in unnecessary detail.

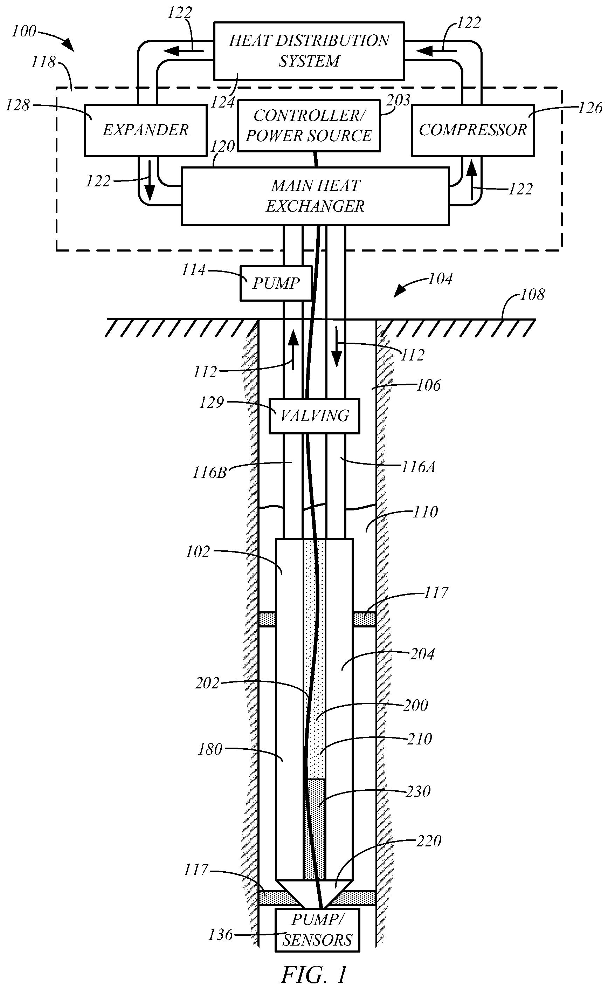

FIG. 1 is a simplified diagram of a system 100, such as a geothermal heat pump system, having a groundwater heat exchanger 102, formed in accordance with one or more embodiments of the present disclosure. The system 100 generally includes a ground loop 104 that extends into a vertical borehole or well 106 (hereinafter "borehole") below the ground surface 108. The borehole 106 may penetrate one or more aquifers or groundwater zones whereby groundwater 110 is present in the borehole 106, such as described in the above-referenced PCT application. The borehole 106 may have a diameter of approximately 3-24 inches, such as 4, 6 or 8 inches, for example. If a well is used, it may be formed much larger than a typical borehole.

The ground loop 104 includes at least one of the groundwater heat exchangers 102 formed in accordance with one or more embodiments described herein. The heat exchanger 102 is positioned within the borehole 106 such that it is completely or partially submerged within the groundwater 110. A loop fluid flow 112 (e.g., water, refrigerant, etc.) that may be driven by a loop pump 114 through piping 116 of the ground loop 104, such as pipes 116A and 116B, and the groundwater 110 within the borehole 106. The loop fluid flow 112 is driven through the heat exchanger 102, which operates to exchange heat between the loop fluid flow 112 and the groundwater 110.

One or more components 117, such as packers, may be used to secure and/or position the heat exchanger 102 within the borehole 106, as shown in FIG. 1. In some embodiments, the components 117 operate to form a seal against the borehole wall and prevent or substantially restrict groundwater from traveling from one side of each component 117 to the other. Thus, the components 117 may be used to seal off lower sections of the borehole 106 from upper sections.

In one embodiment, the piping 116 of the ground loop 104 forms a closed loop of piping, and does not extract groundwater or carry groundwater to the surface. Separate piping (not shown) may be used to capture and return subsurface groundwater 110 to the surface for use (e.g., consumption).

The pipes 116A and 116B that extend below the surface 108 may be thermally insulated to reduce heat exchange with their surroundings and isolating the heat exchange with the fluid flow 112 to the one or more groundwater heat exchangers 102. Thus, rather than providing heat exchange along nearly the entire length of the borehole 106, embodiments of the system 100 provides heat exchange with the groundwater 110 at the one or more groundwater heat exchangers 102 within the borehole 106.

The system 100 may comprise a heat pump 118 that includes a main heat exchanger 120 that is configured to exchange heat between a fluid flow 122 (e.g., water, refrigerant, etc.), which also flows through a heat distribution system 124, and the loop fluid flow 112, as indicated in FIG. 1, using any suitable technique. The heat distribution system 124 may use the fluid flow 122 to provide heating or cooling for a water heater, an HVAC, a chiller, a heat recovery chiller, or another device in accordance with conventional techniques. Alternatively, the system 100 may operate without the main heat exchanger 120, and utilize the loop fluid flow 112 to directly heat or cool a desired medium.

The heat pump 118 may also include conventional heat pump components, such as a compressor 126, an expander 128, and/or other conventional components, as shown in FIG. 1, to perform a desired heat pump cycle. While the compressor 126 and the expander 128 are illustrated as performing a heating cycle based on the direction of the fluid flow 122, it is understood that the direction of the fluid flow 122 may be reversed to perform a cooling cycle.

In some embodiments, control and/or balancing valving 129 may be connected to the pipes 116 at a location between the heat exchanger 102 and the heat pump 118 or heat distribution system 124, as indicated in FIG. 1. The valving 129 may be mechanically or electronically controlled, and may be used to match heating and/or cooling load demand from the heat distribution system 124 with the supply from the heat exchanger 102, for example. The valving 129 may include a bypass connecting the pipes 116A and 116B that may be used to provide additional control of the loop fluid flow 112.

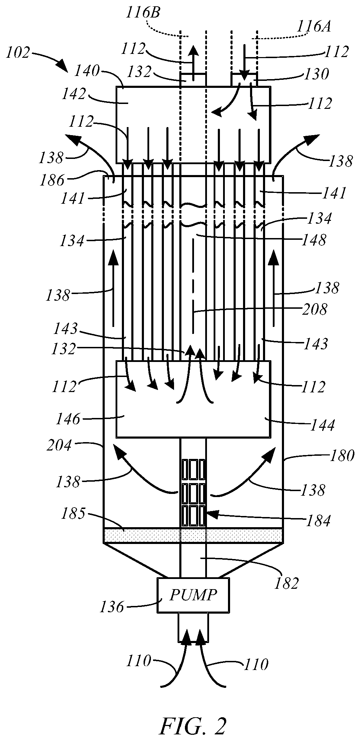

FIG. 2 is a simplified diagram of a groundwater heat exchanger 102, in accordance with embodiments of the present disclosure. The heat exchanger 102 generally receives the loop fluid flow 112, such as through the pipe 116A, at a port 130, and discharges the loop fluid flow 112 to the pipe 116B through a port 132, to return the loop fluid flow 112, for example, to the heat pump 118.

In one embodiment, the heat exchanger 102 circulates the loop fluid flow 112 received at the port 130 to one or a plurality of heat exchange pipes 134, such as more than 3 pipes, more than 5 pipes, more than 10 pipes, or more than 15 pipes, for example. The heat exchanger 102 may include one or more pumps 136 or other means of inducing or driving a flow 138 of the groundwater 110 (FIG. 1) around the pipes 134. This allows for heat exchange between the loop fluid flow 112 and the groundwater flow 138 before the loop fluid flow 112 is returned to the heat exchange components of the system 100, such as the heat pump 118. In other embodiments, the heat exchanger 102 may not utilize a pump 136 to drive the groundwater flow 138, and rely instead on natural groundwater currents and/or convection to drive the groundwater flow or flows 138 through the heat exchanger 102. It is understood that the illustrated flows 112 and 138 may be reversed from directions shown in FIGS. 1 and 2.

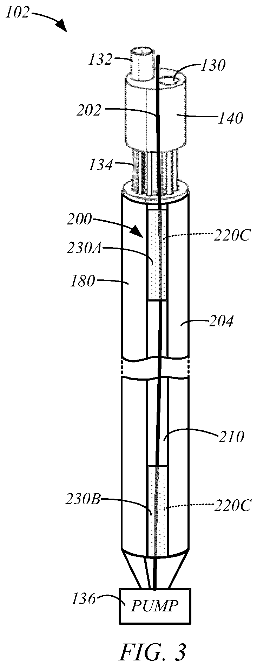

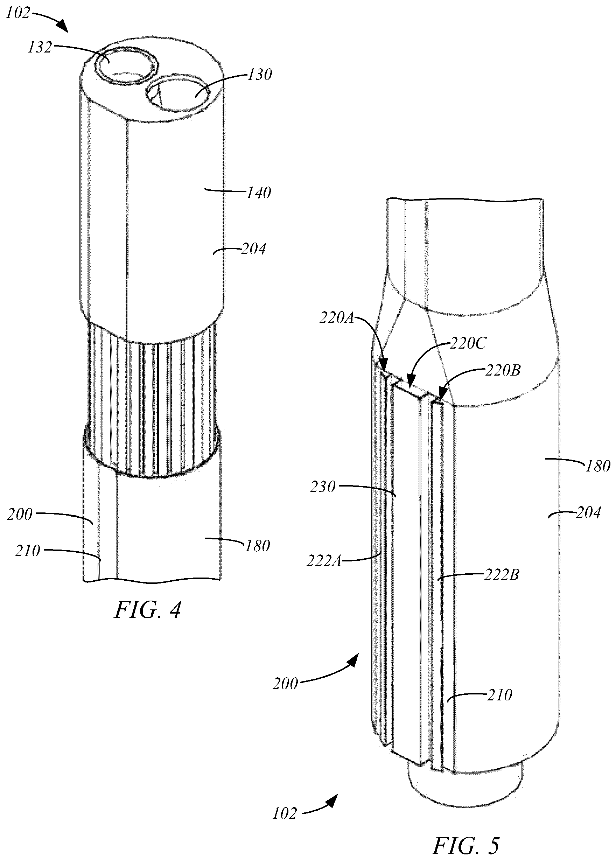

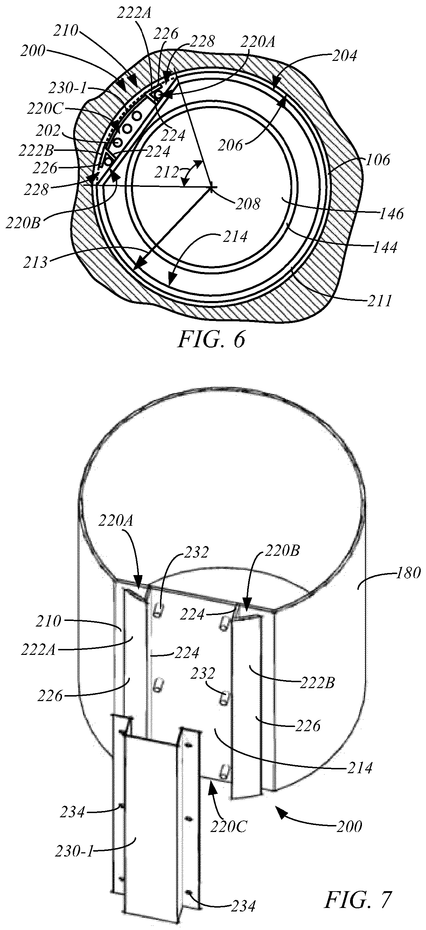

These and other features of the heat exchanger 102 are also shown in FIGS. 3-6. FIG. 3 is an isometric view of an example of a groundwater heat exchanger 102, in accordance with embodiments of the present disclosure. FIG. 4 is an isometric view of a top portion of the groundwater heat exchanger 102 of FIG. 3, and FIG. 5 is an isometric view of a bottom portion of the groundwater heat exchanger, in accordance with embodiments of the present disclosure. FIG. 6 is a cross-sectional view of the bottom portion of the groundwater heat exchanger 102 of FIG. 5, in accordance with embodiments of the present disclosure.

In some embodiments, the heat exchanger 102 includes a distributor 140 that may receive the loop fluid flow 112 through the port 130, and distribute the loop fluid flow 112 into proximal ends 141 of the heat exchange pipes 134 that are attached to the distributor 140 (FIG. 2). In some embodiments, the distributor 140 includes an interior chamber 142 (FIG. 2) that is accessible through the port 130. The pipes 134 are each fluidically coupled to the chamber 142, such that a loop fluid flow 112 received from the port 130 flows into the chamber 142 and through the pipes 134, as indicated in FIG. 2.

In some embodiments, distal ends 143 of the pipes 134 are connected to a collector 144 having a chamber 146, as shown in FIG. 2. A loop fluid flow 112 (FIG. 2) traveling through each of the pipes 134 is received within the chamber 146, and discharged through the port 132. A return pipe 148 may be connected to the port 132 to receive the loop fluid flow 112, and return the loop fluid flow 112 to the system 100, such as the heat pump 118, through the pipe 116B (FIGS. 1 and 2). Thus, the pipes 134 and the return pipe 148 of the heat exchanger 102 define loop fluid passageways through which the loop fluid flow 112 travels. Such loop fluid passageways form a portion of the ground loop 104 (FIG. 1).

In one embodiment, the return pipe 148 (e.g., a schedule 40 2-inch return pipe) extends through the distributor 140, as shown in FIG. 2. A seal is formed between the return pipe 148 and the walls of the distributor 140, through which the pipe 148 extends, to limit access to the chamber 142 through the port 130 and the openings to the heat exchange pipes 134.

In some embodiments, the heat exchanger 102 includes a housing or shroud 180 that contains the groundwater flow or flows 138 such that they travel around and alongside each of the pipes 134, as indicated in FIG. 2. For example, the pump 136 may drive the groundwater flows 138 into the housing 180, which contains the groundwater flows 138 such that they travel alongside each of the heat exchange pipes 134 to facilitate heat transfer between the groundwater flows 138 and the loop fluid flows 112 traveling through the pipes 134.

The pump 136 may be attached at a bottom end of the heat exchanger 102, where it drives the groundwater 110 into the housing 180 to form the groundwater flows 138, as indicated in FIGS. 1-3. The pump 136 may be located outside the housing 180 and attached to a groundwater feed pipe 182 that extends into the bottom end of the housing 180. The groundwater feed pipe 182 may have openings 184, through which the groundwater flows 138 are discharged into the bottom end of the housing 180, as shown in FIG. 2. In some embodiments, a suitable seal 185 is formed between the pipe 182 and the housing 180 to prevent the groundwater flows 138 from escaping through the bottom end of the housing 180.

The groundwater feed pipe 182 may be supported by the collector 144. In some embodiments, the collector 144 includes a fitting without a corresponding access opening to the interior cavity 146, such as a 2-inch female NPT welded to the center of the plate 172, to which the pipe 182 is attached.

The number, length, thickness and diameter of the pipes 134 may be selected based on the size of the bore hole 106, and a desired rate of heat exchange with the groundwater flows 138. In general, the longer the length of the pipes 134, the greater the opportunity for heat exchange between the loop fluid flows 112 within the pipes 134 and the groundwater flows 138 around the pipes 134. In one example, the pipes have a length of 20 feet and a diameter of 0.5 inch.

Components of the heat exchanger 102 may be formed of metal, such as stainless steel, titanium, etc., and/or non-metallic materials, such as plastic (e.g., polyvinyl chloride (PVC)). In some embodiments, the heat exchange pipes 134 are formed of metal to enhance the heat exchange between the loop fluid flows 112 and the groundwater flows 138. In some embodiments, the housing 180 is formed of a non-metallic material, such as PVC, to insulate the groundwater flows 138 from the environment surrounding the housing 180, and for ease of manufacture.

The housing 180 generally surrounds the heat exchange pipes 134. That is, the housing 180 includes at least one section that extends around a longitudinal axis of the pipes 134 to guide the groundwater flow 138 along the exterior of the pipes 134, as generally shown in FIG. 2. An opening 186 (FIG. 2) between the housing and the pipes near the distributor allows the groundwater flow 138 to be discharged back into the borehole 106. This operates to enhance the rate of heat exchange between the loop fluid flows 112 and the groundwater flows 138 through the pipes 134 relative to the rate of heat exchange that would occur without the housing 180 being present.

The heat exchanger 102 may include one or more connections between the distributor 140, the collector 144 and/or the housing 180 that operate to maintain a desired relative position and orientation between the components. Such connections may be formed using one or more rods, dowels, cables, or other suitable components, that attach between the distributor 140, the collector and/or the housing 180.

Some embodiments of the heat exchanger 102 include a cable channel 200 that is configured to accommodate cabling 202 for the pump 136, sensors (e.g., temperature sensor, flow sensor, etc.) and/or other components of the heat exchanger 102, such as shown in FIG. 1. The cabling 202 may include, for example, electrical cabling (e.g., power cables), data communication lines (e.g., sensor wires, control lines), hydraulic lines, and/or other cabling, some of which may extend to a suitable controller and/or power source 203 (FIG. 1) located above or near the surface 108. The cable channel 200 generally operates to define one or more cable pathways through which the cabling 202 may extend to protect the cabling 202 and prevent the cabling 202 from disrupting the installation of the heat exchanger 102 within a borehole 106, such as by preventing the cabling 202 from getting pinched between an exterior 204 of the heat exchanger 102 and an interior wall 206 of the borehole 106, for example. The cable channel 200 may extend along the central axis 208 over the exterior 204 of the housing 180, such as along the entire length the housing 180, or along portions thereof, and the cable channel 200 may be formed in one or more sections.

FIG. 6 is a cross-sectional view of the bottom portion of the heat exchanger 102 through the collector 144 that illustrates an example of the cable channel 200, in accordance with embodiments of the present disclosure. In one embodiment, the housing 180 has a substantially circular cross-sectional profile in a plane that is perpendicular to the central axis 208, except for an recessed portion 210 that is recessed relative to a continuous circular perimeter (phantom line). For example, the housing 180 may include a circular portion 211 comprising a section of the exterior 204 that extends along an arc (e.g., more than about 300 degrees, such as 315-335 degrees) of a circle having a radius 213 from the central axis 208, and the recessed portion 210 is recessed from the circle, as shown in FIG. 6. That is, the recessed portion 210 is located a distance from the central axis 208 that is less than the radius 213. In one embodiment, the recessed portion 210 extends along an arc 212 (e.g., less than about 60 degrees, such as 25-45 degrees) of the exterior 204 of the housing 180.

In some embodiments, the cable channel 200 is formed on (e.g., attached to) and may be defined in part by the recessed portion 210. In one embodiment, the exterior 204 of the housing 180 includes a wall 214 that spans the arc 212 and forms a wall or boundary of the cable channel 200, as shown in FIG. 6. Thus, for example, the wall 214 may take the form of a chord of the housing 180 or have another shape that is recessed from circle corresponding to the remainder of the exterior 204. In some embodiments, the cable channel 200 extends a distance from the central axis 208 that is less than or equal to the radius 213.

FIG. 7 is an exploded isometric view of a portion of the housing 180 that includes a cable channel 200, in accordance with embodiments of the present disclosure. In some embodiments, the cable channel 200 includes features that define one or more pathways 220, in which the cabling 202 may be protected from being pinched between the housing 180 and the interior wall 206 of the borehole 106.

In one embodiment, the cable channel 200 includes one or more channel members 222, such as channel members 222A and 222B, that are attached to the wall portion 214, as shown in FIGS. 5, 6 and 7. In some embodiments, each channel member 222 defines a boundary of a cable pathway 220, such as pathways 220A and 220B, through which cabling 200 may extend. In one example, each channel member 222 includes a divider portion 224 that extends outwardly from the wall portion 214 generally in a radial direction relative to the central axis 208. In some embodiments, one or more of the channel members 222 include a shield portion 226 that extends transversely from the divider portion 224 and at least partially encloses one of the corresponding pathways 220 to maintain the cabling 202 within the pathway 220 and protect it from contact with the interior wall 206 of the borehole 106.

In some embodiments, each of the pathways 220A and 220B includes an access 228 formed between the shield portion 226 and the exterior 204 of the housing 180, such as the wall 214. Each access 228 may extend over the entire length of the corresponding pathway 220. The access 228 can be used to simplify installation of cabling 202 within the pathways 220 by allowing the cabling 202 to be inserted radially relative to the axis 208 into the pathways 220 rather than having to feed the cabling 202 through an end of the pathways 220. In one example, the channel members 222A and 222B and the corresponding accesses 228 extend along an outer edge of the cable channel 200, as shown in FIGS. 6 and 7.

In one embodiment, the cable channel 200 includes one or more cable pathways 220C that may be enclosed by one or more covers 230, as shown in FIG. 3. Thus, the cable channel 200 may include a single cover 230 that spans its entire length or a portion thereof, or multiple covers that span all or a portion of the length of the cable channel 200. In the example of FIG. 3, covers 230A and 230B each span a portion of the length of the cable channel 200. Thus, in some embodiments, portions of the cable pathway 220C may not be fully enclosed.

One example cover 230-1 is shown in FIG. 6, which covers a cable pathway 220C. In one embodiment, the cover 230-1 is removably attached to the housing 180 using suitable fasteners, as indicated in FIG. 7. This allows the cabling 202 to be installed within the pathway 220C without having to feed the cabling 202 through an end of the pathway 220C.

In one example, the fasteners, may include bolts or pegs 232 extend from the exterior wall 204 of the housing 180, such as the wall portion 214. The cover 230-1 may be attached to the housing 180 after the cabling 202 is placed within the pathway 220C by positioning the cover 230-1 so that the bolts or pegs 232 extend through corresponding openings 234 in the cover 230. The fasteners may include suitable nuts or pins, for example, that attached to the bolts or pegs 232 to secure the cover 230-1 to the housing 180. The cover 230-1 may be configured to be fastened to the housing 180 using other techniques and fasteners.

The separate cable pathways, such as pathways 220A-C, allow for the separation of different cable types. For example, it may be desirable to position power cables within the pathway 220C to ensure that it is not exposed to the borehole wall 206, while low voltage or non-electrical cabling may be positioned within the outer pathways 220A and 220B.

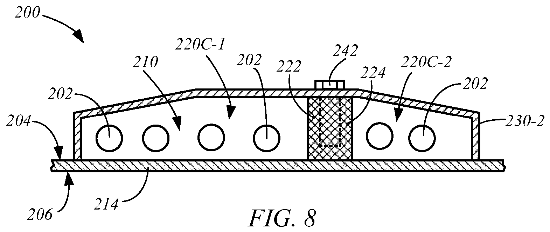

FIG. 8 is a simplified partial side cross-sectional view of an example of the cable channel 200 mounted to the housing 180 at the recessed portion 210, in accordance with embodiments of the present disclosure. The remainder of the housing 180 and other portions of the heat exchanger 102 are not shown in order to simplify the drawing.

The example cable channel 200 of FIG. 8 includes a channel member 222 having a divider portion 224 that is attached to the wall 214 and extends along the length and the axis 208 (FIGS. 2 and 6) of the housing 180. The cable channel 200 may comprise a single channel member 222 that extends substantially along the entire length (e.g., at least 70%) of the housing 180, or multiple channel members 222, each extending along a portion of the length of the housing 180.

In some embodiments, one or more covers 230-2 attach to the divider portion 224 to form cable channels 220C-1 and 220C-2, each of which is defined by the wall 214, the channel member 222/divider portion 240 and the cover 230-2. The one or more covers 230-2 may be attached to the channel member(s) 222 using suitable fasteners 242, such as bolts, at various locations along the divider portion 224. Cables 202 may be installed within each pathway 220C-1 and 220C-2 before installing the covers 230-2, as shown in FIG. 8. In some embodiments, the cover(s) 230-2 and the wall 214 substantially enclose the pathways 220C-1 and 220C-2 to a degree that at least maintains the cabling 202 within the pathways 220C-1 and 220C-2 during normal use.

The cable channels 200 formed in accordance with embodiments of the present disclosure on the exterior 204 of the housing 180 provides advantages, such as avoiding the need to feed the cabling 202 through the interior of the housing 180 which may be difficult due to interference with the piping 134, the collector 144, sealing components 185, etc. Also, interference with the groundwater flow 138 and the heat exchange with the heat exchange pipes 134 is avoided by routing the cabling 202 through the cable channel 200. Additionally, embodiments of the cable channel 200 facilitate the installation of cabling 202 without having to feed the cabling along the central axis 208 over the length of the housing 185, such as by allowing the cabling 202 to be moved radially (laterally) into the cable pathways 220.

Embodiments of the present disclosure also include the installation of the groundwater heat exchanger 102 formed in accordance with one or more embodiments described herein within a borehole 106. In one example, such an installation includes installing the cabling 202 into the one or more cable pathways 220 of the cable channel. In one embodiment, electrical cables (e.g., power cables) are routed through separate cable pathways 220 than data communication or control lines to prevent electromagnetic interference from introducing noise into the data communication or control lines. For example, power cabling 202 may be routed through the cable pathway 220C, while data communication or control lines 202 may be routed through or placed within the cable pathway 220A and/or 220 of the cable channel 200 shown in FIG. 6. Likewise, power cabling 202 may be routed through the cable pathway 220C-1, while data communication or control lines 202 may be routed through or placed within the cable pathway 220C-2 of the cable channel 200 shown in FIG. 8. In some embodiments, this installation of the cabling 202 in the one or more cable channels 220 includes the removal and re-installation of a cover 230, such as the cover 230-1 (FIG. 6) or the cover 230-2 (FIG. 8).

After the cabling 202 (e.g., power cable for the pump 136) is installed in the one or more cable pathways 220, the heat exchanger 102 may be inserted into the borehole 106 (FIG. 1). During this step, the cabling 220 is protected from becoming pinched against the wall of the borehole 106 by the cable channel 200, such as the cover 230-1, the cover 230-2 and/or the shield portions 226.

Although the embodiments of the present disclosure have been described with reference to preferred embodiments, workers skilled in the art will recognize that changes may be made in form and detail without departing from the spirit and scope of the present disclosure.
The present application also discloses subject-matter in accordance with the following numbered paragraphs:
NP1. A groundwater heat exchanger comprising: a plurality of heat exchange pipes, each heat exchange pipe configured to receive a loop fluid flow; a housing having an interior chamber containing the plurality of heat exchange pipes and defining a groundwater passageway that is configured to receive a groundwater flow;
   and a cable channel formed on an exterior of the housing and extending along a central axis of the housing, the cable channel including at least one cable pathway configured to receive one or more cables.
NP2. The groundwater heat exchanger according to NP1, wherein: a cross-section of the exterior of the housing taken perpendicularly to the central axis includes a circular portion and a recessed portion; and the cable channel is formed on the recessed portion.
NP3. The groundwater heat exchanger according to NP2, wherein: the circular portion is located along an arc of a circle that is coaxial to the central axis; and the recessed portion extends a distance from the radial axis that is less than the radial distance.
NP4. The groundwater heat exchanger according to NP3, wherein the housing includes a wall defining the recessed portion.
NP5. The groundwater heat exchanger according to NP4, wherein the wall spans an arc of the circle.
NP6. The groundwater heat exchanger according to NP4, wherein the cable channel includes at least one channel member that is attached to and extends from the wall, each cable channel member including a divider portion that defines a portion of one of the at least one cable pathway.
NP7. The groundwater heat exchanger according to NP6, wherein the cable channel includes a cover extending along the central axis and covering an opening to at least one of the at least one cable pathway.
NP8. The groundwater heat exchanger according to NP6, wherein each cable channel member includes a shield portion that extends transversely from the divider portion and defines a portion of one of the at least one cable pathway.
NP9. The groundwater heat exchanger according to NP8, wherein: the at least one channel member includes a pair of the channel members; and the cable channel includes a cover extending along the central axis between the pair of the channel members and covering an opening to one of the cable pathways.
NP10. The groundwater heat exchanger according to NP4, wherein: the cable channel includes: a channel member that is attached to and extends from the wall; and a cover attached to the channel member; and the cover and the channel member define a pair of the cable pathways, located on opposing sides of the channel member.
NP11. The groundwater heat exchanger according to NP1, including: a pump attached to the housing; and a power cable connected to the pump and extending through one of the cable pathways.
NP12. The groundwater heat exchanger according to NP1, including: a sensor attached to the housing; and a sensor wire connected to the sensor and extending through one of the cable pathways.
NP13. A method of installing a groundwater heat exchanger within a borehole, the groundwater heat exchanger including: a plurality of heat exchange pipes, each heat exchange pipe configured to receive a loop fluid flow; a housing having an interior chamber containing the plurality of heat exchange pipes and defining a groundwater passageway that is configured to receive a groundwater flow; and a cable channel formed on an exterior of the housing and extending along a central axis of the housing, the cable channel including at least one cable pathway configured to receive one or more cables,
   the method comprising: installing cabling within the at least one cable pathway; and inserting the groundwater heat exchanger into the borehole.
NP14. The method according to NP13, wherein: a cross-section of the exterior of the housing taken perpendicularly to the central axis includes a circular portion, which is located along an arc of a circle that is coaxial to the central axis, and a recessed portion, which extends a distance from the radial axis that is less than the radial distance; and the cable channel is formed on the recessed portion.
NP15. The method according to NP14, wherein the cable channel includes at least one channel member that is attached to and extends from the recessed portion, each cable channel member comprising a divider portion that defines a portion of one of the cable pathways.
NP16. The method according to NP15, wherein: the at least one channel member includes a pair of the channel members; a first cable pathway extends between the pair of the channel members; and installing the cabling includes: laying at least one cable in each of the cable pathways; and attaching a cover to the recessed portion that covers the first cable pathway.
NP17. The method according to NP14, wherein: the cable channel includes a channel member that is attached to and extends from the recessed portion wherein first and second cable pathways are located on opposing sides of the channel member; and installing the cabling includes: laying at least one cable in each of the cable pathways; and attaching a cover to the channel member that covers the first and second cable pathways.
NP18. The method according to NP13, wherein: the groundwater heat exchanger includes a pump attached to the housing; and installing cabling within the at least one cable pathway includes installing a power cable connected to the pump in one of the cable pathways.
NP19. The method according to NP13, wherein: the groundwater heat exchanger includes a sensor attached to the housing; and installing cabling within the at least one cable pathway includes installing a sensor wire connected to the sensor in one of the cable pathways.
NP20. A groundwater heat exchanger comprising: a plurality of heat exchange pipes, each heat exchange pipe configured to receive a loop fluid flow; a housing having an interior chamber containing the plurality of heat exchange pipes; a pump attached to the housing and configured to drive a groundwater flow through a groundwater passageway that extends through the interior chamber and along the plurality of heat exchange pipes; a cable channel formed on an exterior of the housing and extending along a central axis of the housing, the cable channel including a cable pathway; and a power cable connected to the pump and supported in the cable pathway.

## Claims

1. A groundwater heat exchanger comprising:
a plurality of heat exchange pipes, each heat exchange pipe configured to receive a loop fluid flow;
a housing having an interior chamber containing the plurality of heat exchange pipes and defining a groundwater passageway that is configured to receive a groundwater flow; and
a cable channel formed on an exterior of the housing and extending along a central axis of the housing, the cable channel including at least one cable pathway configured to receive one or more cables.

2. The groundwater heat exchanger according to claim 1, wherein:
a cross-section of the exterior of the housing taken perpendicularly to the central axis includes a circular portion and a recessed portion; and
the cable channel is formed on the recessed portion.

3. The groundwater heat exchanger according to claim 2, wherein:
the circular portion is located along an arc of a circle that is coaxial to the central axis; and
the recessed portion extends a distance from the radial axis that is less than the radial distance.

4. The groundwater heat exchanger according to claim 3, wherein the housing includes a wall defining the recessed portion.

5. The groundwater heat exchanger according to claim 4, wherein the wall spans an arc of the circle.

6. The groundwater heat exchanger according to claim 4, wherein the cable channel includes at least one channel member that is attached to and extends from the wall, each cable channel member including a divider portion that defines a portion of one of the at least one cable pathway.

7. The groundwater heat exchanger according to claim 6, wherein the cable channel includes a cover extending along the central axis and covering an opening to at least one of the at least one cable pathway.

8. The groundwater heat exchanger according to claim 6, wherein each cable channel member includes a shield portion that extends transversely from the divider portion and defines a portion of one of the at least one cable pathway.

9. The groundwater heat exchanger according to claim 8, wherein:
the at least one channel member includes a pair of the channel members; and
the cable channel includes a cover extending along the central axis between the pair of the channel members and covering an opening to one of the cable pathways.

10. The groundwater heat exchanger according to claim 4, wherein:
the cable channel includes:
a channel member that is attached to and extends from the wall; and
a cover attached to the channel member; and
the cover and the channel member define a pair of the cable pathways, located on opposing sides of the channel member.

11. The groundwater heat exchanger according to claim 1, including:
a pump attached to the housing and a power cable connected to the pump and extending through one of the cable pathways; and/or
a sensor attached to the housing and a sensor wire connected to the sensor and extending through one of the cable pathways.

12. A method of installing the groundwater heat exchanger according to claim 1 within a borehole, the method comprising:
installing cabling within the at least one cable pathway; and
inserting the groundwater heat exchanger into the borehole.

13. The method according to claim 12, wherein:
a cross-section of the exterior of the housing taken perpendicularly to the central axis includes a circular portion, which is located along an arc of a circle that is coaxial to the central axis, and a recessed portion, which extends a distance from the radial axis that is less than the radial distance; and
the cable channel is formed on the recessed portion.

14. The method according to claim 13, wherein the cable channel includes at least one channel member that is attached to and extends from the recessed portion, each cable channel member comprising a divider portion that defines a portion of one of the cable pathways.

15. The method according to claim 13, wherein:
the cable channel includes a channel member that is attached to and extends from the recessed portion wherein first and second cable pathways are located on opposing sides of the channel member; and
installing the cabling includes:
laying at least one cable in each of the cable pathways; and
attaching a cover to the channel member that covers the first and second cable pathways.
